# EUROPÄISCHE PATENTSCHRIFT

(11) **EP 0 650 660 B1**
(45) Veröffentlichungstag und Bekanntmachung des Hinweises auf die Patenterteilung: **09.02.2000**
(21) Anmeldenummer: 94115248.0
(22) Anmeldetag: 28.09.1994
(51) Int. Cl.: A01C 15/04, A01C 7/10

(54) **Verteilmaschine zum Ausbringen eines Verteilgutes**
Distributor for flowable material
Distributeur de produits granulés

(30) Priorität: 02.11.1993 DE 9316622 U
(43) Veröffentlichungstag der Anmeldung: 03.05.1995
(73) Patentinhaber: Rabewerk GmbH + Co., 49152 Bad Essen (DE)
(72) Erfinder: Pleyer, Peter, D-49152 Bad Essen (DE)
(74) Vertreter: Missling, Arne, Dipl.-Ing.

(56) Entgegenhaltungen:
- EP-A- 0 251 052
- EP-A- 0 476 266
- EP-A- 0 592 995
- DE-A- 3 906 971
- FR-A- 2 432 825
- US-A- 5 050 771

## Beschreibung

Die Erfindung betrifft eine Verteilmaschine zum Ausbringen eines Verteilgutes wie Saatgut, Dünger oder dergleichen auf eine land- oder forstwirtschaftlich genutzte Ackerfläche, die auf einem Schlepper oder einer schleppergezogenen Bodenbearbeitungsmaschine installierbar ist und zum Verteilen des vorzugsweise körnigen Verteilgutes auf die Ackerfläche dient, wobei die Verteilmaschine einen Vorratsbehälter für das Verteilgut und aus ihrer Arbeitsstellung aushebbare Streuer für das Verteilgut, insbesondere Säschare oder Düngerstreuer, sowie eine von einem regelbaren, vorzugsweise elektrischen Antrieb angetriebene Dosiereinrichtung für die dosierte pneumatische Förderung des Verteilgutes aus dem Vorratsbehälter über eine Zuleitung zu den zugehörigen Streuern umfaßt und wobei die Geschwindigkeit und/oder der zurückgelegte Weg der Streuer von einem Meßfühler sensorisch gemessen und die so gewonnenen Meßsignale zur Steuerung des Antriebes für die Dosiereinrichtung in der Weise verwendet werden, daß eine gleichförmige Verteilung des Verteilgutes auf der gesamten Ackerfläche gewährleistet ist.

Eine solche Verteilmaschine ist aus der deutschen Offenlegungsschrift DE 3310424 A1 im wesentlichen bekannt. Sie soll sicherstellen, daß die spezifischen Austragsmengen des Verteilgutes unabhängig von Störgrößen aus der Bewegung der verteilmaschine, der Ackerfläche usw. stets selbsttätig eingehalten werden, ohne daß der Betreiber dazu auf Austrags-Tabellen oder ähnliche Hilfsmittel zurückzugreifen genötigt wäre. Zwischen dem Vorratsbehälter für das Verteilgut und den Streuern, deren Zuführungen hier einzeln dosiert werden, ist in Fahrtrichtung ein ganz erheblicher Abstand. Im Gegensatz zu anderen Ausführungen, bei denen der Vorratsbehälter unmittelbar über den Streuern angeordnet ist und damit das Verteilgut sofort ausgebracht wird, wenn der Antrieb der Dosiereinrichtung von dem Meßfühler eingeschaltet wird, dann nämlich, wenn der Meßfühler eine Bewegung signalisiert, geschieht das bei dieser Ausführung erst mit einer zeitlichen Verzögerung, weil das Verteilgut erst aus dem Vorratsbehälter zu den Streuern transportiert werden muß. Es vergeht demzufolge ein Zeitintervall, bis ein stationärer Verteilvorgang erreicht ist. In dieser Zeit wird kein oder zu wenig Verteilgut ausgebracht. Umgekehrt wird Verteilgut nachgefördert, wenn am Ende der zu belegenden Ackerfläche der Antrieb für die Dosiereinrichtung abgeschaltet wird.

Diese Nachteile lassen sich vermeiden, wenn die Dosiereinrichtung unmittelbar über den Streuern angeordnet ist; im allgemeinen ist es dazu aber erforderlich, daß ein Zwischenbehälter installiert wird, in den zunächst das Verteilgut aus dem Vorratsbehälter gefördert wird, welch letzterer seinerseits an einer Stelle vorgesehen ist, die eine ausgewogene Gewichtsverteilung begünstigt. Eine typische Ausführung zeigt die europäische Patentanmeldung EP 0 251 053 A2. Der Vorratsbehälter einer Sämaschine ist hier im Frontanbau an einem Schlepper vorgesehen, der außer der Verteilmaschine noch mit einer Bodenbearbeitungsmaschine und anderen Bodenbearbeitungswerkzeugen ausgerüstet ist. Die durch eine solche Bauweise ermöglichte günstige Gewichtsverteilung erfordert aber den erwähnten Zwischenbehälter, um sicherzustellen, daß das Verteilgut unverzögert ausgebracht oder dessen Ausbringung unverzögert unterbrochen werden kann, wenn der Antrieb der Dosiereinrichtung dementsprechend geschaltet wird. Wird dazu als diese Schaltung auslösendes Organ ein nicht angetriebenes, auf dem Ackerboden abrollendes Meßrad verwandt, das zusammen mit den hier als Säschare ausgebildeten Streuern angehoben und abgesenkt wird, dann wird Verteilgut tatsächlich nur dann flächenrichtig ausgebracht, wenn die Säschare den zu besäenden Ackerboden überstreichen. Eine solche Anordnung ist aber außerordentlich aufwendig. Abgesehen von der zusätzlichen apparativen Ausrüstung verlangt die Förderung aus dem Vorratsbehälter in den Zwischenbehälter außer einem gesonderten Antrieb auch eine umfängliche Steuerung, um dessen Volumen in erträglichen Grenzen zu halten und um sicherzustellen, daß gerade soviel Verteilgut gefördert wird, wie aus dem Zwischenbehälter auszutragen ist; dazu ist ein Füllstandssensor erforderlich, der die Förderung nach Bedarf in Gang setzt oder unterbricht, je nachdem, wie der Zwischenbehälter gefüllt ist. Statt dessen kann auch eine Rückleitung vorgesehen sein, die überschüssiges Verteilgut in den Vorratsbehälter zurückfördert. In jedem Fall ist ein erheblicher Aufwand erforderlich, um die Förderung des Verteilgutes zu steuern.

Die Erfindung hat sich deshalb die Aufgabe gestellt, eine Verteilmaschine der eingangs näher bezeichneten Art so auszubilden, daß die vorerwähnten Nachteile nicht auftreten und die Ausbringung des Verteilgutes gleichmäßig in einer vorgegebenen Ausbring-Dichte bereits dann erfolgt, wenn die zugehörigen Streuer sich - in Fahrtrichtung - am Beginn der zu behandelnden Ackerfläche befinden, und daß diese Ausbring-Dichte bis zu dem Ende der Ackerfläche beibehalten wird.

Erfindungsgemäß wird die Aufgabe dadurch gelöst, daß der Meßfühler (5) im Bereich der Streuer (61) angeordnet ist und der Antrieb der Dosiereinrichtung (25) unabhängig davon ist, ob sich die Streuer (61) in ihrer Arbeitsstellung befinden oder nicht, und daß der Antrieb nach Wunsch sowohl unmittelbar als auch über den Meßfühler schaltbar ist.

Die starre Kopplung der Schaltung des Antriebes für die Dosiereinrichtung an den Schaltzustand des Meßfühlers und damit den Betriebszustand der Streuer ist damit aufgegeben. Während der Meßfühler nach wie vor den - eingeschalteten - Antrieb in Abhängigkeit von einer Führungsgröße steuert, ist der Beginn und das Ende seiner Aktivierung nicht notwendig mit dem Anheben oder Absenken der Streuer verbunden, sondern viel freier wählbar.

Nach wie vor ist es auch bei der erfindungsgemäßen Ausführung möglich, daß die Anordnung so getroffen ist, daß der Meßfühler dann aktiviert oder deaktiviert wird, wenn die Streuer in ihre Arbeitsstellung gebracht oder aus dieser entfernt werden, wobei der Antrieb für die Dosiereinrichtung nach Wunsch schaltbar ist, insbesondere unabhängig davon, ob die Streuer in ihre Arbeitsstellung gebracht oder aus dieser entfernt werden.

Es ist aber auch möglich, daß die Anordnung so getroffen ist, daß anstelle des Antriebes stattdessen der Meßfühler nach Wunsch aktivier- oder deaktivierbar ist, insbesondere unabhängig davon, ob die Streuer in ihre Arbeitsstellung gebracht oder aus dieser entfernt werden. Hierbei ist demzufolge die Aktivierung und Deaktivierung des Meßfühlers von einer Höhenänderung der Streuer entkoppelt und der Antrieb für die Dosiereinrichtung wiederum einer Schaltung nach Wunsch zugänglich.

Der Meßfühler kann als Meßrad ausgebildet sind, das auf dem Ackerboden aufliegt und von diesem antreibbar ist; in bekannter Weise sind dafür Spornräder verwendbar, die auch unter ungünstigen Bedingungen verläßliche Messungen, beispielsweise ohne Schlupf zwischen dem Spornrad und dem Ackerboden, liefern.

Als besonders günstig erweist es sich, wenn der Meßfühler in Fahrtrichtung hinter den Streuern auf bereits bearbeitetem Ackerboden abläuft. Aufgrund dessen einheitlicher Bodenoberfläche ist der Ablauf wesentlich gleichmäßiger als auf noch unbearbeitetem Ackerboden.

Bei einer bevorzugten Ausgestaltung der Erfindung ist vorgesehen, daß der Meßfühler seitlich von und in Fahrtrichtung kurz hinter den Streuern vorgesehen ist. Das ist wegen des elektrischen Antriebes auch dann ohne Schwierigkeiten realisierbar, wenn der Antrieb von dem Meßfühler weit entfernt vorgesehen ist. Die Ausführung vermeidet auf diese Weise Nachteile, die sich ergeben, wenn sich der Meßfühler an anderer stelle, beispielsweise in der Nähe eines an einem Schlepper frontseitig befestigten Vorratsbehälters, befindet, wie das beispielsweise aus einer Druckschrift "DF-Fronttank" der Fa. Accord Landmaschinen H. Weiste & Co. GmbH seit langem bekannt ist. Insbesondere im Vorgewende ist der Betrieb schwierig, wenn dieses nicht sehr eben ist und trotzdem das als Meßfühler dienende Spornrad noch etwas darin laufen muß, bis die gesamte Ackerfläche bearbeitet ist.

Es ist zweckmäßig, wenn zwischen dem Vorratsbehälter und den Streuern mindestens ein Verteilerkopf vorgesehen ist, in den mindestens eine pneumatische Zuleitung für das Verteilgut aus dem Vorratsbehälter mündet und mit dem jeder Streuer durch mindestens eine gesonderte Zuführung für das Verteilgut pneumatisch verbunden ist.

Der Antrieb für die Dosiereinrichtung kann aus einem Elektromotor und einem Getriebe zusammengesetzt sein. Der Elektromotor kann dazu vorteilhaft nach Wunsch direkt oder indirekt mit Hilfe des Meßfühlers geschaltet werden. Oder aber das Getriebe kann nach Wunsch direkt oder indirekt mit Hilfe des Meßfühlers eingekuppelt werden. Es ist dabei sowohl möglich, daß mit Hilfe des Meßfühlers die Drehzahl des Elektromotors als auch das Getriebe geregelt wird.

Für eine vollständig-korrekte Bearbeitung der gesamten Ackerfläche kann es hilfreich sein, wenn an dem Schlepper oder der Bodenbearbeitungsmaschine eine Markierung vorgesehen ist, die bei ihrem Zusammentreffen mit dem Beginn oder dem Ende der für die Ausbringung vorgesehenen Ackerfläche als Hinweis zur Schaltung des Antriebes für die Dosiereinrichtung dient.

Ausgesprochen vorteilhaft für eine solche Bearbeitung kann es sein, wenn im Arbeitsbereich des Betreibers eine Schaltvorrichtung für die Dosiereinrichtung vorgesehen ist und ein zugehöriges Anzeigegerät dem Betreiber eine voreingestellte Zeitspanne vom Zeitpunkt der Aktivierung bzw. Deaktivierung der Dosiereinrichtung an signalisiert, wobei in dem Zeitintervall zwischen der Aktivierung der Dosiereinrichtung und dem nachfolgenden Starten bzw. der Deaktivierung der Dosiereinrichtung und dem nachfolgenden Anhalten des Schleppers das Verteilgut mit einer konstanten, beispielsweise mittleren Geschwindigkeit gefördert wird.

In gleicher Weise kann eine solche Bearbeitung auch dadurch noch weiter abgesichert werden, daß im Bereich des Verteilerkopfes oder mindestens eines Streuers ein weiterer Meßfühler angeordnet ist, der den beginnenden oder endenden Durchfluß des Verteilgutes in den Streuer feststellt und mittels eines zugehörigen Anzeigegerätes dem Betreiber signalisiert, wobei die Anordnung so getroffen ist, daß in dem Zeitintervall zwischen der Aktivierung der Dosiereinrichtung und dem nachfolgenden Starten bzw. der Deaktivierung der Dosiereinrichtung und dem nachfolgenden Anhalten des Schleppers das Verteilgut mit einer konstanten, beispielsweise mittleren Geschwindigkeit gefördert wird. Da die erfindungsgemäße Anordnung besonders vorteilhaft einsetzbar ist, wenn die Dosiereinrichtung von den Streuern weit entfernt vorgesehen ist, insbesondere bei einem Frontanbau des Vorratsbehälters, gleichgültig, ob sich zwischen dem rückwärtigen Teil der Verteilmaschine mit den Streuern und dem Schlepper noch Bodenbearbeitungswerkzeuge befinden oder nicht, kann ein solches erfindungsgemäßes Hilfsmittel durchaus erwünscht sein, das die Ankunft des Verteilgutes an den Streuern signalisiert und es ermöglicht, daß der Schlepper zum richtigen Zeitpunkt der beginnenden Ausbringung des Verteilgutes gestartet bzw. der endenden Ausbringung angehalten wird.

Insgesamt ist es durch die erfindungsgemäße Ausführung nunmehr möglich, eine Ackerfläche gleichförmig auch an ihren Rändern mit Verteilgut zu bedecken; insbesondere beim Ausbringen von Saatgut wird damit sichergestellt, daß die auflaufenden Kulturen weder zu dicht noch zu vereinzelt stehen. Vor allem in einem Vorgewende, das abschließend ebenfalls besät wird, ist damit eine doppelte Saatgutausbringung vermieden. Ebenso kann mit der erfindungsgemäßen Ausführung verhindert werden, daß es zu sogenannten Säfenstern, d.h. Bereichen, in welchen kein Saatgut ausgebracht wird, kommt.

Die Erfindung wird nachstehend an Hand der Zeichnung an einem Ausführungsbeispiel noch weiter erläutert. Es zeigen
- Fig. 1: eine erfindungsgemäße Verteilmaschine als Bestandteil einer Bodenbearbeitungskombination und
- Fig. 2: eine derartige Bodenbearbeitungskombination,
jeweils in schematisch vereinfachter Darstellung quer zu deren Fahrtrichtung.

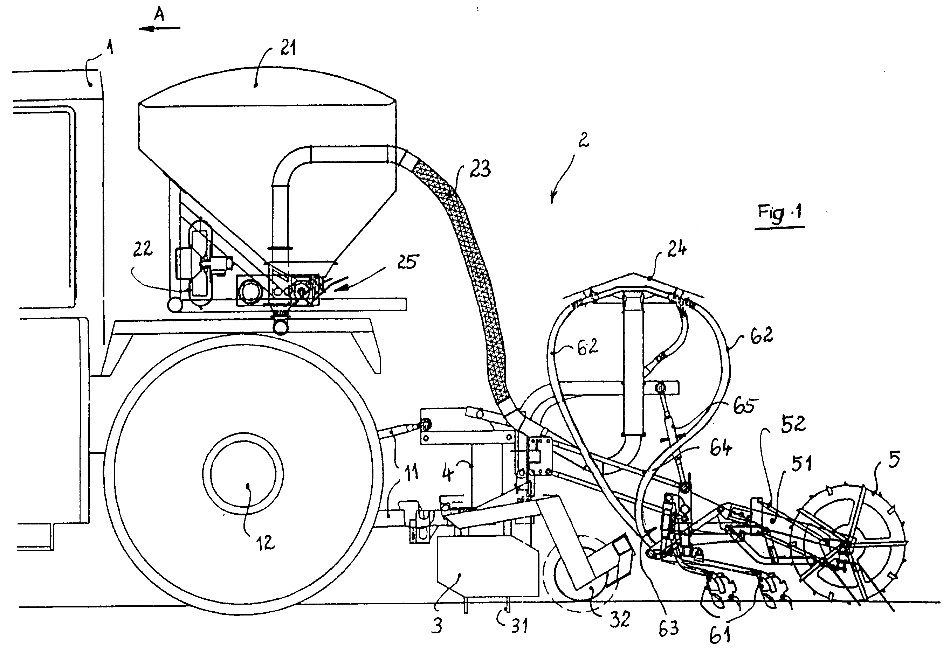

Auf einem Schlepper 1 ist entsprechend Fig. 1 ein Vorratsbehälter 21 einer Verteilmaschine 2 aufgesattelt; er befindet sich oberhalb und etwa über einer Hinterachse 12 des Schleppers 1. Eine Bodenbearbeitungsmaschine 3, die in bekannter Weise aus einer Kreiselegge 31 und einer Krümelwalze 32 besteht, ist über einen Rahmen 4 an einem Dreipunktgestänge 11 des Schleppers 1 befestigt. Mit Hilfe der Schlepperhydraulik ist über das Dreipunktgestänge 11 der Rahmen 4 zusammen mit der gesamten Bodenbearbeitungsmaschine 3 anheb- und absenkbar. Die Einzelheiten dazu stehen in keinem unmittelbaren Zusammenhang mit der Erfindung, sind außerdem fachüblich und deshalb nicht weiter zu erörtern.

An dem Vorratsbehälter 21 befindet sich ein Gebläse 22, das eine pneumatische Förderung des Verteilgutes über eine Zuleitung 23 zu einem Verteilerkopf 24 besorgt, wenn eine Dosiereinrichtung 25 entsprechend geschaltet ist. Die Dosiereinrichtung 25 ist an dem Vorratsbehälter 21 ortsfest und umfaßt in bekannter Weise noch einen Antrieb, beispielsweise bestehend aus einem Elektromotor und einem Getriebe. Der Antrieb ist von einem Meßfühler 5 steuerbar, der in Fahrtrichtung A des Schleppers 1 am Ende der gesamten Anordnung vorgesehen und hier als Spornrad ausgebildet ist. Die von dem Meßfühler 5 erzeugten Meßsignale z. B. für den zurückgelegten Weg oder die Geschwindigkeit der Verteilmaschine 2 werden in elektrische Meßgrößen transformiert und mittels einer in der Zeichnung weggelassenen elektrischen Meßleitung dem Antrieb der Dosiereinrichtung 25 zugeführt; sie steuern die fortwährend an die jeweiligen Bedingungen anzupassende Dosierung des Verteilgutes.

Der Verteilerkopf 24 ist an dem Rahmen 4 befestigt und dient zur Aufteilung des über die Zuleitung 23 eingeförderten Verteilgutes zu den einzelnen Streuern 61, mit denen er über flexible Zuführungen 62 verbunden ist. Die Streuer 61, die das Verteilgut auf die Ackerfläche ausbringen, habe eine gemeinsame Befestigung 63, die mittels eines Gestänges 64 durch einen hydraulischen Linearmotor 65 heb- und senkbar an dem Rahmen 4 befestigt ist. Andererseits ist, mittels eines weiteren Linearmotors 51, der Meßfühler 5 über ein Gestänge 52 an der Befestigung 63 ebenfalls höhenbeweglich angelenkt.

Die Anordnung läßt zu, daß, je nachdem, wie die hydraulischen Linearmotoren 51, 65 betätigt werden, der Meßfühler 5 und die Streuer 61 gemeinsam oder einzeln angehoben oder abgesenkt werden. Der Meßfühler 5 wird in jedem Falle dann aktiviert, wenn er abgesenkt, und deaktiviert, wenn er angehoben wird, gleichgültig, ob diese Bewegungen zusammen mit den Streuern 61 ausgeführt werden oder nicht. Ist der Meßfühler 5 aktiviert und der Antrieb der Dosiereinrichtung 25 eingeschaltet, dann kann er diesen Antrieb steuern.

Es ist nun möglich, daß der Antrieb entweder vom Fahrer des Schleppers 1 oder auch selbsttätig von dem Meßfühler 5 dann geschaltet wird, wenn dieser aktiviert oder deaktiviert ist. Auf diese Weise kann man die Verteilmaschine 2 allen örtlichen Gegebenheiten ohne Schwierigkeiten anpassen, insbesondere dem Beginn und der Beendigung der Ausbringung des Verteilgutes. Die Schaltung des Antriebes kann dabei durch Hilfsmittel unterstützt werden, wie sie von entsprechenden Markierungen an dem Schlepper 1 oder der Bodenbearbeitungskombination usw. oder auf dem Acker, die dort mittels Lichtschranken, Bewegungsmelder oder dergleichen getastet werden, oder auch durch Anzeigeeinrichtungen für die Anzeige der Förderung des Verteilgutes gebildet werden.

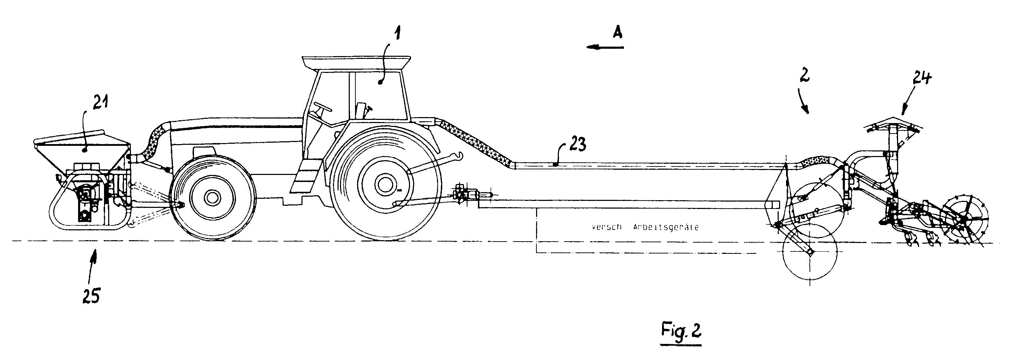

Wie wichtig gegebenenfalls eine solche ergänzende Anordnung sein kann, verdeutlicht die erfindungsgemäße Bodenbearbeitungskombination der Fig. 2. Dort ist der Vorratsbehälter 21 einschließlich der zugehörigen Dosiereinrichtung 25 an dem Schlepper 1 im Frontanbau befestigt und mit dem Verteilerkopf 24 durch eine sehr lange Zuleitung 23 verbunden. Zwischen dem rückwärtigen Teil der Verteilmaschine 2 und dem Schlepper 1 können weitere, in der Zeichnung nicht ausgeführte Bodenbearbeitungsgeräte vorgesehen sein. Der erforderliche Vorlauf der Verteilgut-Förderung beim Starten bzw. das vorzeitige Abschalten der Verteilgut-Förderung beim Anhalten des Schleppers 1, beispielsweise auch bei einem Halt während der Saatbettbearbeitung durch Bodenhindernisse oder aus anderen Gründen, ist dann visuell nur mit Schwierigkeit steuerbar und es besteht die Gefahr, daß Verteilgut verschwendet wird und beispielsweise Saatgut später viel zu dicht aufläuft, wo sich der Schlepper 1 in Stillstand befunden hat.

Durch die erfindungsgemäße Anordnung einer Anzeigeeinrichtung für die Anzeige der Förderung des Verteilgutes läßt es sich nun beispielsweise beim Starten so einrichten, daß die Dosiereinrichtung 25 zunächst aktiviert und diese Aktivierung im Schlepper 1 so angezeigt wird, daß der Betreiber erkennt, daß der Start des Schleppers noch nicht erfolgen soll, sondern erst, wenn die Ankunft des Verteilgutes in den Streuern durch den entsprechenden weiteren Meßfühler signalisiert wird, etwa durch Farbänderung an der Anzeigeeinrichtung oder dergleichen; beim Stopp des Schleppers läuft der Vorgang in der umgekehrten Reihenfolge ab.

### Bezugszeichen:

- 1: Schlepper
- 11: Dreipunktgestänge
- 12: Hinterachse
- 2: Verteilmaschine
- 21: Vorratsbehälter
- 22: Gebläse
- 23: Zuleitung
- 24: Verteilerkopf
- 25: Dosiereinrichtung
- 3: Bodenbearbeitungsmaschine
- 31: Kreiselegge 31
- 32: Krümelwalze 32
- 4: Rahmen
- 5: Meßfühler
- 51: Linearmotor
- 52: Gestänge
- 61: Streuer
- 62: Zuführung
- 63: Befestigung
- 64: Gestänge
- 65: Linearmotor
- A: Fahrtrichtung

## Patentansprüche

1. Verteilmaschine zum Ausbringen eines Verteilgutes wie Saatgut, Dünger oder dergleichen auf eine land- oder forstwirtschaftlich genutzte Ackerfläche, die auf einem Schlepper (1) und/oder einer schleppergezogenen Bodenbearbeitungsmaschine (3) installierbar ist und zum Verteilen des vorzugsweise körnigen Verteilgutes auf die Ackerfläche dient, wobei die Verteilmaschine (2) einen Vorratsbehälter (21) für das Verteilgut und aus ihrer Arbeitsstellung aushebbare Streuer (61) für das Verteilgut, insbesondere Säschare oder Düngerstreuer, sowie eine von einem regelbaren elektrischen Antrieb angetriebene Dosiereinrichtung (25) für die dosierte pneumatische Förderung des Verteilgutes aus dem Vorratsbehälter (21) über eine Zuleitung (23) zu den zugehörigen Streuern (61) umfaßt und wobei die Geschwindigkeit und/oder der zurückgelegte Weg der Streuer (61) von einem Meßfühler (5) sensorisch gemessen und die so gewonnenen Meßsignale zur Steuerung des Antriebes für die Dosiereinrichtung (25) in der Weise verwendet werden, daß eine gleichförmige Verteilung des Verteilgutes auf der gesamten Ackerfläche gewährleistet ist,
dadurch gekennzeichnet daß
der Meßfühler (5) im Bereich der Streuer (61) angeordnet ist und der Antrieb der Dosiereinrichtung (25) unabhängig davon ist, ob sich die Streuer (61) in ihrer Arbeitsstellung befinden oder nicht, und daß der Antrieb nach Wunsch sowohl unmittelbar als auch über den Meßfühler schaltbar ist.

2. Verteilmaschine nach Anspruch 1, dadurch gekennzeichnet, daß die Anordnung so getroffen ist, daß der Meßfühler (5) dann aktiviert oder deaktiviert wird, wenn die Streuer (61) in ihre Arbeitsstellung gebracht oder aus dieser entfernt werden.

3. Verteilmaschine nach Anspruch 1, dadurch gekennzeichnet, daß die Anordnung so getroffen ist, daß der Meßfühler (5) nach Wunsch aktivier- oder deaktivierbar ist, insbesondere unabhängig davon, ob die Streuer (61) in ihre Arbeitsstellung gebracht oder aus dieser entfernt werden.

4. Verteilmaschine nach einem der Ansprüche 1 bis 3, dadurch gekennzeichnet, daß der Meßfühler (5) als Meßrad ausgebildet ist, das auf dem Ackerboden aufliegt und von diesem antreibbar ist.

5. Verteilmaschine nach einem der Ansprüche 1 bis 4, dadurch gekennzeichnet, daß der Meßfühler (5) in Fahrtrichtung (A) hinter den Streuern (61) angeordnet ist.

6. Verteilmaschine nach einem der Ansprüche 1 bis 5, dadurch gekennzeichnet, daS der Meßfühler (5) seitlich von und in Fahrtrichtung (A) kurz hinter den Streuern (61) vorgesehen ist.

7. Verteilmaschine nach einem der Ansprüche 1 bis 6, dadurch gekennzeichnet, daß zwischen dem Vorratsbehälter (21) und den Streuern (61) mindestens ein Verteilerkopf (24) vorgesehen ist, in den mindestens eine pneumatische Zuleitung (23) für das Verteilgut aus dem Vorratsbehälter (21) mündet und mit dem jeder Streuer (61) durch mindestens eine gesonderte Zuführung (62) für das Verteilgut pneumatisch verbunden ist.

8. Verteilmaschine nach einem der Ansprüche 1 bis 7, dadurch gekennzeichnet, daß der Antrieb für die Dosiereinrichtung (25) aus einem Elektromotor und einem Getriebe zusammengesetzt ist.

9. Verteilmaschine nach Anspruch 8, dadurch gekennzeichnet, daß der Elektromotor nach Wunsch direkt oder indirekt mit Hilfe des Meßfühler (5) geschaltet wird.

10. Verteilmaschine nach Anspruch 8, dadurch gekennzeichnet, daß das Getriebe nach Wunsch direkt oder indirekt mit Hilfe des Meßfühlers (5) eingekuppelt wird.

11. Verteilmaschine nach Anspruch 9 oder 10, dadurch gekennzeichnet, daß die Drehzahl des Elektromotors und das Getriebe mit Hilfe des Meßfühlers (5) geregelt werden.

12. Verteilmaschine nach Anspruch 1 und 2, dadurch gekennzeichnet, daß eine Markierung vorgesehen ist, die bei ihrem Zusammentreffen mit dem Beginn oder dem Ende der für die Ausbringung vorgesehenen Ackerfläche als Hinweis zur Schaltung des Antriebes für die Dosiereinrichtung (25) dient und welche an dem Schlepper (1) oder der Bodenbearbeitungsmaschine (3) anbringbar ist.

13. Verteilmaschine nach einem der Ansprüche 1 bis 12, dadurch gekennzeichnet, daß im Arbeitsbereich des Betreibers eine Schaltvorrichtung für die Dosiereinrichtung (25) vorgesehen ist, und daß ein zugehöriges Anzeigegerät dem Betreiber eine voreingestellte Zeitspanne vom Zeitpunkt der Aktivierung bzw. Deaktivierung der Dosiereinrichtung (25) an signalisiert, wobei die Anordnung so getroffen ist, daß in dem Zeitintervall zwischen der Aktivierung der Dosiereinrichtung (25) und dem nachfolgenden Starten bzw. der Deaktivierung der Dosiereinrichtung (25) und dem nachfolgenden Anhalten des Schleppers (1) das Verteilgut mit einer konstanten, beispielsweise mittleren Geschwindigkeit gefördert wird.

14. Verteilmaschine nach einem der Ansprüche 1 bis 13, dadurch gekennzeichnet, daß im Bereich des Verteilerkopfes (24) oder mindestens eines Streuers (61) ein weiterer Meßfühler angeordnet ist, der den beginnenden oder endenden Durchfluß des Verteilgutes in dem Streuer (61) feststellt und mittels eines zugehörigen Anzeigegerätes dem Betreiber signalisiert, wobei die Anordnung so getroffen ist, daß in dem Zeitintervall Zwischen der Aktivierung der Dosiereinrichtung (25) und dem nachfolgenden Starten bzw. der Deaktivierung der Dosiereinrichtung (25) und dem nachfolgenden Anhalten des Schleppers (1) das Verteilgut mit einer konstanten, beispielsweise mittleren Geschwindigkeit gefördert wird.

## Claims

1. A distributor for delivering material such as seeds, fertiliser or the like to an area of arable land used for agriculture or forestry, being installable on a tractor (1) and/or a tractor-drawn soil-cultivation machine (3) and having the function of distributing the preferably granular material over the area of arable land, wherein the distributor (2) comprises a storage hopper (21) for the material, spreaders (61) for the material raisable out of their operating position, in particular seed drills or fertiliser spreaders, and a metering device (25) driven by a controllable electric drive for the metered pneumatic supply of the material from the storage hopper (21) to the associated spreaders (61) via a supply line (23), and wherein the speed of and/or the distance covered by the spreaders (61) is detected by a measuring sensor (5), and the measuring signals thus obtained are used to control the drive for the metering device (25) in order to ensure uniform distribution of the material over the entire area of arable land, characterised in that the measuring sensor (5) is arranged in the region of the spreaders (61), and the drive of the metering device (25) is independent of whether or not the spreaders (61) are in their operating position, and in that the drive is connectable as required both directly and via the measuring sensor.

2. A distributor according to claim 1, characterised in that the arrangement is such that the measuring sensor (5) is activated or deactivated when the spreaders (61) are moved into or out of their operating position.

3. A distributor according to claim 1, characterised in that the arrangement is such that the measuring sensor (5) is activatable or deactivatable as required, in particular irrespective of whether the spreaders (61) are moved into or out of their operating position.

4. A distributor according to any one of claims 1 to 3, characterised in that the measuring sensor (5) is formed as a measuring wheel which rests against the ground and is drivable by the latter.

5. A distributor according to any one of claims 1 to 4, characterised in that the measuring sensor (5) is arranged downstream of the spreaders (61) in the direction of travel (A).

6. A distributor according to any one of claims 1 to 5, characterised in that the measuring sensor (5) is arranged laterally to and slightly downstream of the spreaders (61) in the direction of travel (A).

7. A distributor according to any one of claims 1 to 6, characterised in that at least one distributor head (24), to which at least one pneumatic supply line (23) for the material from the storage hopper (21) leads and to which each spreader (61) is pneumatically connected by at least one separate feeder (62) for the material, is provided between the storage hopper (21) and the spreaders (61).

8. A distributor according to any one of claims 1 to 7, characterised in that the drive for the metering device (25) comprises an electric motor and a transmission.

9. A distributor according to claim 8, characterised in that the electric motor is connected as required directly or indirectly via the measuring sensor (5).

10. A distributor according to claim 8, characterised in that the transmission is engaged as required directly or indirectly via the measuring sensor (5).

11. A distributor according to claim 9 or 10, characterised in that the speed of the electric motor and the transmission are controlled by the measuring sensor (5).

12. A distributor according to claims 1 and 2, characterised in that a marker is provided which, on meeting the beginning or the end of the area of arable land to be treated, serves as an indication to switch the drive for the metering device (25) on or off and which is mountable on the tractor (1) or the soil-cultivation machine (3).

13. A distributor according to any one of claims 1 to 12, characterised in that a switching device for the metering device (25) is provided in the working area of the operator, and in that an associated indicator signals to the operator a preset time period starting from the time of activation or deactivation of the metering device (25), the arrangement being such that, in the time interval between activation of the metering device (25) and subsequent starting of the tractor (1), or deactivation of the metering device (25) and subsequent stopping of the tractor (1), the material is supplied at a constant, for example average speed.

14. A distributor according to any one of claims 1 to 13, characterised in that a further measuring sensor is arranged in the region of the distributor head (24) or at least one spreader (61) and detects the beginning or the end of the flow of material in the spreader (61) and signals this to the operator by means of an associated indicator, the arrangement being such that, in the time interval between activation of the metering device (25) and subsequent starting of the tractor (1), or deactivation of the metering device (25) and subsequent stopping of the tractor (1), the material is supplied at a constant, for example average speed.

## Revendications

1. Machine distributrice pour, sur une surface de champ exploitée pour l'économie agricole ou forestière, débiter un produit à épandre, comme des semences, du fumier ou similaire, cette machine pouvant être installée sur un tracteur (1) et/ou sur une machine de travail du sol (3) tirée par tracteur, et servant à répartir le produit à épandre, de préférence en grains, sur la surface du champ, la machine distributrice (2) comportant un réservoir de stockage (21) pour le produit à épandre, et des épandeurs (61) du produit à épandre, en particulier des socs de semoir ou des épandeurs à fumier, pouvant être soulevés de leur position de travail, ainsi qu'un dispositif de dosage (25) mû par un entraînement électrique régulable, pour, depuis le réservoir de stockage (21), débiter pneumatiquement vers les épandeurs associés (61), en le dosant, le produit à épandre, par une conduite d'alimentation (23), et la vitesse et/ou le chemin parcouru par les épandeurs (61), étant mesurés et détectés au moyen d'un capteur (5), et les signaux de mesure ainsi obtenus étant utilisés pour commander l'entraînement du dispositif de dosage (25), de façon à assurer, sur toute la surface du champ, une répartition régulière du produit à épandre,
caractérisé en ce que
le capteur (5) est disposé dans la zone des épandeurs (61) et en ce que l'entraînement du dispositif de dosage (25) est indépendant du fait que les épandeurs (61) se trouvent ou non dans leur position de travail, et en ce qu'on peut enclencher à volonté l'entraînement, aussi bien directement que par l'intermédiaire du capteur (5).

2. Machine distributrice suivant la revendication 1, caractérisée en ce que l'installation est réalisée de telle façon que le capteur (5) soit activé ou désactivé quand les épandeurs (61) sont mis dans leur position de travail ou en sont écartés.

3. Machine distributrice suivant la revendication 1, caractérisée en ce que l'installation est réalisée de telle façon que le capteur (5) soit activé ou désactivé, à volonté, en particulier, indépendamment du fait que les épandeurs (61) soient mis dans leur position de travail ou en soient écartés.

4. Machine distributrice suivant l'une des revendications 1 à 3, caractérisée en ce que le capteur (5) est réalisé sous la forme d'une roue de mesure reposant sur le sol du champ et entraînée par celui-ci.

5. Machine distributrice suivant l'une des revendications 1 à 4, caractérisée en ce que le capteur (5) est disposé, dans le sens de déplacement (A), derrière les épandeurs (61).

6. Machine distributrice suivant l'une des revendications 1 à 5, caractérisé en ce que le capteur (5) est prévu sur le côté et, dans le sens de déplacement (A), un peu en arrière des épandeurs (61).

7. Machine distributrice suivant l'une des revendications 1 à 6, caractérisé en ce qu'entre le réservoir (21) et les épandeurs (61), il est prévu au moins une tête répartitrice (24) dans laquelle débouche au moins une conduite d'alimentation pneumatique (23) pour le produit à épandre provenant du réservoir (21), et à laquelle chaque épandeur (61) est relié pneumatiquement par au moins une alimentation distincte (62).

8. Machine distributrice suivant l'une des revendications 1 à 7, caractérisée en ce que l'entraînement du dispositif de dosage (25) est constitué d'un moteur électrique et d'un réducteur.

9. Machine distributrice suivant la revendication 8, caractérisé en ce que le moteur électrique est, à volonté, branché directement ou indirectement à l'aide du capteur (5).

10. Machine distributrice suivant la revendication 8, caractérisée en ce que le réducteur est, à volonté, accouplé directement ou indirectement à l'aide du capteur (5).

11. Machine distributrice suivant la revendication 9 ou la revendication 10, caractérisée en ce que la vitesse de rotation du moteur électrique et le réducteur sont régulés par le capteur (5).

12. Machine distributrice suivant la revendication 1 et la revendication 2, caractérisée en ce qu'il est prévu un dispositif de marquage qui, à la rencontre avec le début ou la fin de la surface de champ prévue pour l'épandage, sert d'avertissement pour enclencher l'entraînement du dispositif de dosage (25), et qui peut être installé sur le tracteur (1), ou sur la machine de préparation du sol (3).

13. Machine distributrice suivant l'une des revendications 1 à 12, caractérisée en ce que, dans la zone de travail du conducteur, il est prévu un tableau de commande pour le dispositif de dosage (25), et en ce qu'un appareil indicateur associé signale au conducteur qu'il dispose d'une durée, réglée à l'avance, depuis l'instant de l'activation ou de la désactivation du dispositif de dosage (25), l'installation étant conçue de telle façon que, dans l'intervale de temps entre l'activation ou la désactivation du dispositif de dosage (25), et le démarrage consécutif, ou respectivement la désactivation du dispositif de dosage (25) et l'arrêt consécutif du tracteur (1), le produit à épandre est débité avec une vitesse constante, par exemple moyenne.

14. Machine distributrice suivant l'une des revendications 1 à 13, caractérisé en ce que, dans la zone de la tête de répartition (24) ou au moins d'un épandeur (61), est disposé un autre capteur qui détermine dans l'épandeur (61) le début ou la fin du débit du produit à distribuer, et signale cela au conducteur au moyen d'un appareil indicateur associé, l'installation étant conçue de façon que, dans l'intervalle de temps entre l'activation du dispositif de dosage (25), et le démarrage consécutif, ou respectivement la désactivation du dispositif de dosage (25) et l'arrêt consécutif du tracteur (1), le produit à épandre est débité avec une vitesse constante, par exemple moyenne.
